# DEMANDE DE BREVET EUROPEEN

(11) **EP 0 701 157 A1**
(43) Date de publication de la demande: **13.03.1996**
(21) Numéro de dépôt: 95402008.7
(22) Date de dépôt: 05.09.1995
(51) Int. Cl.: G02B 7/182

(54) **Mécanisme de montage isostatique d'un élément fragile tel qu'un miroir, utilisable notamment sur un engin spatial**

(30) Priorité: 07.09.1994 FR 9410710
(71) Demandeur: AEROSPATIALE Société Nationale Industrielle, F-75781 Paris Cédex 16 (FR)
(72) Inventeur: Huiban, Thierry, F-06210 Mandelieu (FR); Bailly, Bruno, F-06210 Mandelieu (FR)
(74) Mandataire: Dubois-Chabert, Guy

(57) **Abrégé**

Le montage isostatique d'un élément fragile tel qu'un miroir sur un support, généralement embarqué sur un engin spatial, est assuré par un mécanisme formé de trois dispositifs de liaison (14) identiques, répartis circonférentiellement autour de l'axe optique. Chaque dispositif (14) comprend une lame souple (16) dont l'axe longitudinal est orienté, de préférence, selon une direction (YY') tangentielle à un cercle centré sur l'axe optique. La section de la lame souple (16) diminue progressivement depuis une première extrémité (24) fixée sur le support, jusqu'à une deuxième extrémité (26) fixée sur le miroir, au travers d'un organe déformable (21). Cet organe déformable (21) travaille en flexion, pour permettre une rotation relative autour d'un axe orienté radialement. Les fixations sur le support et sur le miroir sont assurées par des tiges (30, 34) travaillant uniquement en traction et en compression.

## Description

L'invention concerne un mécanisme conçu pour assurer le montage isostatique d'un élément fragile tel qu'un miroir sur un support.

Un tel mécanisme peut être utilisé dans tous les cas où un élément fragile, appartenant par exemple à un système optique, doit être positionné avec précision et de façon invariable même en cas de dilatation différentielle entre l'élément et son support, d'une manière telle que des efforts importants puissent être absorbés sans dommage et notamment sans introduire de contraintes susceptibles d'endommager l'élément fragile.

Une application privilégiée, bien que non exclusive, d'un tel mécanisme concerne le montage d'un élément fragile tel qu'un miroir d'un système optique sur un engin spatial tel qu'un satellite, une sonde spatiale, un télescope spatial, etc... Dans cette application, l'axe optique du miroir ainsi que son foyer et sa distance focale doivent être invariables. Cependant, le système optique subit des variations de température particulièrement importantes, notamment lors du passage d'une zone d'ombre à une zone éclairée. Par ailleurs, le système optique est soumis lors du lancement de l'engin à des accélérations particulièrement élevées, qui doivent être absorbées par le mécanisme de montage du miroir. Le miroir doit donc être supporté de façon isostatique par ce mécanisme.

Différents mécanismes ont déjà été proposés afin de réaliser le montage isostatique d'un élément fragile tel qu'un miroir sur un support embarqué sur un engin spatial.

Ainsi, dans le document FR-A-2 534 663, la fixation d'un miroir sur un support embarqué sur un satellite est assurée par trois dispositifs répartis circonférentiellement autour de l'axe optique du miroir. Chaque dispositif comprend une lame souple disposée dans un plan sensiblement tangentiel à une surface cylindrique centrée sur l'axe optique. Plus précisément, l'axe longitudinal de chaque lame souple s'étend parallèlement à cet axe. Chacune des lames souples a la forme d'un V dont le sommet est fixé rigidement à une plaque de base d'une poutre à section en X, en T, en Y ou en V. L'extrémité opposée de la poutre est fixée par encastrement sur le miroir et les extrémités opposées des deux branches du V formé par la lame sont fixées par encastrement sur le support. La lame souple et la poutre peuvent être réalisées d'une seule pièce par usinage ou fixées l'une à l'autre par un joint universel, bloqué par un écrou lors du montage. Lorsqu'elles sont réalisées d'une seule pièce, la lame souple et la poutre peuvent être fabriquées en Invar (marque déposée).

Dans ce mécanisme, les lames souples présentent une rigidité, dans les sens circonférentiel et axial, qui assure le positionnement souhaité du miroir et permet d'absorber les efforts engendrés lors du lancement du satellite. La flexion de la lame permet quant à elle de prendre en compte les dilatations différentielles entre le miroir et son support en autorisant à la fois un déplacement relatif dans le sens radial, une rotation relative autour d'un axe parallèle à l'axe optique et une rotation relative autour d'un axe tangentiel à une surface cylindrique centrée sur cet axe optique. Enfin, la poutre par laquelle la lame souple est reliée au miroir est agencée pour travailler en torsion afin de permettre une rotation relative autour d'un axe orienté radialement par rapport à l'axe optique.

Bien que ces caractéristiques générales soient satisfaisantes, ce mécanisme présente certains inconvénients.

Tout d'abord, l'utilisation d'une poutre travaillant en torsion pour permettre un débattement en rotation autour d'un axe orienté radialement par rapport à l'axe optique nécessite une poutre présentant une certaine longueur, ce qui se traduit par une augmentation peu satisfaisante de l'encombrement radial. La limitation de cet encombrement conduit à raccourcir la poutre et, par conséquent, à en augmenter la raideur. De ce fait, des contraintes indésirables risquent d'être appliquées sur le miroir.

Par ailleurs, du fait que les lames souples sont orientées sensiblement parallèlement à l'axe optique, les dilatations différentielles peuvent entraîner des déplacements du miroir parallèlement à son axe optique d'environ 1 µm. Dans certains cas, de tels déplacements sont incompatibles avec les tolérances générales du système optique.

Enfin, les fixations par encastrement qui sont réalisées sur le miroir et sur le support ne permettent pas de garantir une stabilité de positionnement parfaite lorsque le mécanisme subit des efforts intenses, notamment lors du lancement du satellite. En effet, les tolérances des liaisons par encastrement imposent un jeu minimal d'environ 10 µm et les vis qui assurent les liaisons ne peuvent être bloquées avec des efforts de serrage trop importants, faute de quoi des déformations irréversibles seraient engendrées dans le miroir et/ou dans son support.

Un autre mécanisme de montage isostatique est décrit dans le document FR-A-2 503 387. Dans ce mécanisme, on utilise des lames souples de section uniforme qui sont reliées au miroir par l'intermédiaire d'un ensemble de trois croisillons formés chacun de deux lamelles entrecroisées. Le croisillon central, fonctionnant en flexion, autorise un débattement angulaire autour d'un axe orienté radialement par rapport à l'axe optique et les deux croisillons latéraux autorisent un débattement angulaire autour d'un axe orienté tangentiellement par rapport à une surface cylindrique centrée sur l'axe optique.

Ce mécanisme présente pour l'essentiel les mêmes inconvénients que le précédent.

Ainsi, l'ensemble de trois croisillons par lequel chacune des lames est reliée au miroir augmente de façon notable le coût et l'encombrement du mécanisme.

Par ailleurs, les lames souples sont orientées également dans le sens de l'axe optique, ce qui entraîne un déplacement axial non négligeable du miroir sous l'effet de variations de température.

Enfin, aucune solution au problème des liaisons par encastrement reliant le mécanisme au miroir et à son support n'est proposée.

L'invention a principalement pour objet un mécanisme de montage isostatique dont la conception originale permet de réduire son encombrement et son coût sans introduire de contrainte supplémentaire dans l'élément fragile supporté par ce mécanisme.

Conformément à l'invention, cet objectif est atteint grâce à un mécanisme de montage isostatique d'un élément fragile tel qu'un miroir, sur un support, comprenant trois dispositifs de liaison répartis circonférentiellement autour d'un axe longitudinal de l'élément fragile, chacun de ces dispositifs de liaison comprenant une première lame souple disposée sensiblement dans un plan tangent à une surface cylindrique centrée sur ledit axe longitudinal, une première extrémité de la lame souple étant fixée sur le support et une deuxième extrémité de la lame souple étant reliée à l'élément fragile par un organe déformable, autorisant une rotation relative entre l'élément fragile et son support, autour d'un axe orienté radialement par rapport audit axe longitudinal, caractérisé par le fait que la lame souple a une section qui diminue progressivement depuis sa première extrémité vers sa deuxième extrémité ; l'organe déformable étant un organe apte à se déformer en flexion pour permettre ladite rotation relative autour dudit axe orienté radialement.

L'utilisation d'une lame souple présentant une section évolutive permet d'utiliser un organe déformable simplifiée. Du fait que cet organe travaille en flexion, son encombrement peut être très faible sans que des contraintes résiduelles soient engendrées dans le miroir. Le mécanisme selon l'invention est donc plus simple, moins coûteux et moins encombrant que les mécanismes connus. Cependant, le caractère isostatique du montage et la résistance à des efforts élevés sont assurés dans des conditions comparables à celles qui caractérisent ces mécanismes connus.

Dans une forme de réalisation préférentielle de l'invention, l'organe déformable comprend au moins deux lamelles croisées selon ledit axe orienté radialement, et dont les extrémités sont fixées respectivement sur la deuxième extrémité de la lame souple et sur une pièce liée à l'élément fragile.

Selon le cas, les lamelles forment alors un X ou un V.

Les lamelles, la lame souple ainsi que la pièce liée à l'élément fragile peuvent être réalisées séparément ou, au contraire, d'un seul tenant.

Dans une forme de réalisation particulière de l'invention, la pièce liée à l'élément fragile est une deuxième lame souple, identique et coplanaire à la première lame souple et dont la section diminue progressivement depuis une première extrémité fixée sur le support jusqu'à une deuxième extrémité fixée sur les lamelles.

Avantageusement, les déplacements axiaux de l'élément fragile, engendrés par des variations de température, sont réduits en orientant l'axe longitudinal de chacune des lames souples selon une direction tangentielle à un cercle centré sur l'axe de l'élément fragile.

En variante, l'axe longitudinal des lames souples peut toutefois être orienté selon la direction axiale, notamment lorsque l'élément fragile est de petites dimensions. Les lames souples sont alors réalisées en un matériau à très faible coefficient de dilatation thermique tel que de l'Invar (marque déposée).

Afin d'augmenter la résistance au flambage des lames souples, chacune d'entre elles présente de préférence au moins une nervure qui s'étend parallèlement à son axe longitudinal.

Avantageusement, une bonne stabilité de l'élément fragile est assurée, sans engendrer de contrainte susceptible d'endommager cet élément ou son support, en fixant la pièce précitée à l'élément fragile et la lame souple au support par deux paires de tiges de fixation qui coupent à angle droit l'axe, orienté radialement, autour duquel une rotation relative entre l'élément fragile et son support est rendue possible par les lamelles croisées.

De préférence, les tiges de fixation sont alors disposées symétriquement par rapport à l'axe longitudinal de la lame souple.

On décrira à présent, à titre d'exemples non limitatifs, différentes formes de réalisation de l'invention, en se référant aux dessins annexés, dans lesquels :
- la figure 1 est une vue de face représentant de façon très schématique un mécanisme de montage isostatique d'un miroir sur un support, conforme à l'invention ;
- la figure 2 est une vue selon la flèche II sur la figure 1, qui représente schématiquement l'un des dispositifs de liaison du mécanisme de montage isostatique de la figure 1 ;
- la figure 3 est une vue en perspective représentant plus en détail une partie du dispositif de liaison de la figure 2 ;
- la figure 4 est une vue en perspective comparable à la figure 3 représentant une autre forme de réalisation de l'invention ; et
- la figure 5 est une vue en perspective comparable aux figures 3 et 4 illustrant encore une autre forme de réalisation de l'invention.

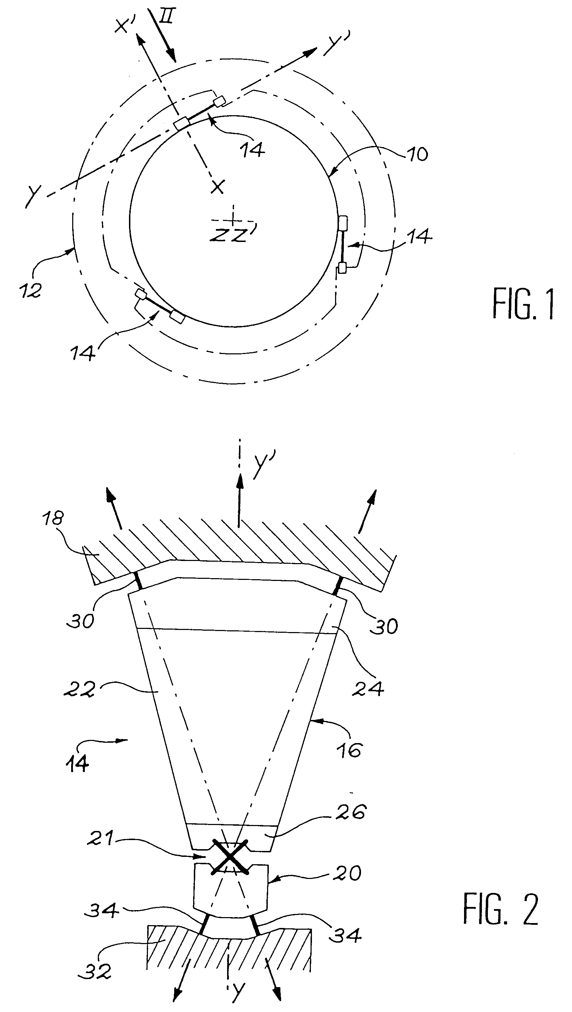

Sur la figure 1, la référence 10 désigne de façon générale un élément fragile tel qu'un miroir faisant partie d'un système optique plus complexe, par exemple un télescope spatial. Ce miroir 10, vu de face sur la figure 1, présente un axe longitudinal constitué par un axe optique ZZ' perpendiculaire au plan de la figure.

Le miroir 10 est monté de façon isostatique sur un support 12 dont seul le contour est représenté en traits mixtes sur la figure 1. Ce support 12 présente dans ce cas la forme d'une couronne disposée autour du miroir 10 et centrée sur son axe optique ZZ'. Il est fixé d'une manière quelconque à la structure (non représentée) d'un engin spatial.

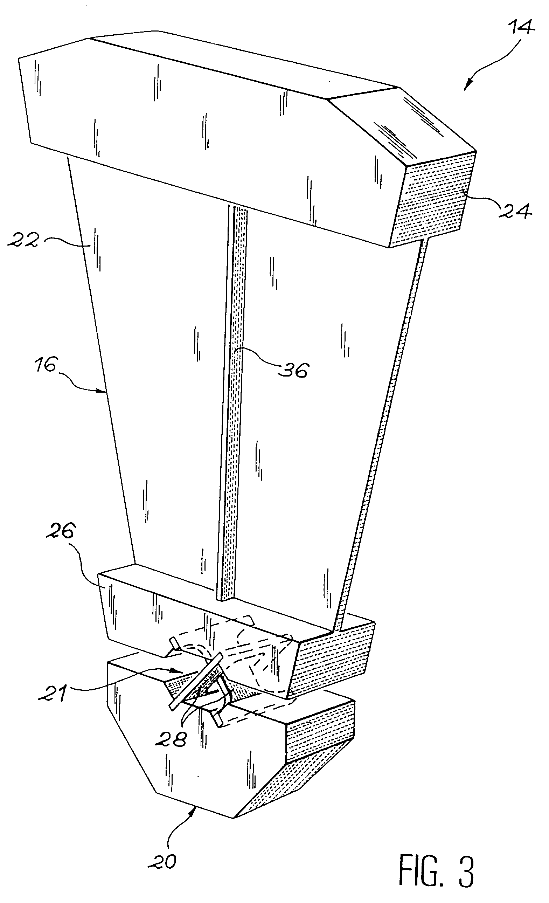

Conformément à l'invention, le montage isostatique du miroir 10 sur le support 12 est assuré par un mécanisme qui comprend trois dispositifs de liaison 14 répartis circonférentiellement autour de l'axe optique ZZ'. Ces trois dispositifs de liaison 14 sont identiques et seul l'un d'entre eux va à présent être décrit, dans une première forme de réalisation de l'invention, en se référant aux figures 2 et 3.

Chaque dispositif de liaison 14 comprend tout d'abord une lame souple 16, généralement plane. Cette lame souple 16 est placée dans un plan tangent à une surface cylindrique centrée sur l'axe optique ZZ'. Plus précisément, dans la forme de réalisation illustrée sur les figures 1 à 3, l'axe longitudinal de la lame 16 est orienté selon une direction YY' circonférentielle ou tangentielle à un cercle centré sur l'axe optique ZZ'. Cet agencement permet d'éviter que des variations de température importantes n'engendrent un déplacement inacceptable du miroir 10 parallèlement à son axe optique ZZ'.

Comme l'illustre plus précisément la figure 2, la lame souple 16 présente en vue de dessus sensiblement la forme d'un trapèze isocèle dont la grande base est fixée sur un bloc 18 solidaire du support 12 et dont la petite base est reliée à une pièce 20 par un organe déformable 21. La largeur de la lame souple 16 diminue donc progressivement depuis son extrémité fixée sur le bloc 18 jusqu'à son extrémité reliée à la pièce 20 par l'organe déformable 21.

Comme l'illustre plus précisément la figure 3, la majeure partie de la lame souple 16 est formée par une partie principale 22, d'épaisseur uniforme et relativement faible, constituant la lame proprement dite. Pour permettre la liaison avec les pièces attenantes, la lame 16 est terminée à chacune de ses extrémités par une partie de plus forte épaisseur. Cette partie de plus forte épaisseur est désignée par la référence 24 pour l'extrémité correspondant à la grande base du trapèze isocèle et par la référence 26 pour l'extrémité correspondant à la petite base de ce trapèze.

Avantageusement, la partie principale 22 de la lame souple 16 comporte sur chacune de ses faces au moins une nervure ou un voile 36 orienté parallèlement à son axe longitudinal. Dans la forme de réalisation illustrée sur la figure 3, une nervure unique est prévue selon cet axe longitudinal. Elle permet d'augmenter la résistance au flambage de la lame souple 16.

L'organe déformable 21, par lequel la partie d'extrémité 26 de la lame souple 16 est reliée à la pièce 20, est conçu pour pouvoir se déformer en flexion pour permettre une rotation relative entre le miroir 10 et son support 12, autour d'un axe XX' (figure 1) orienté radialement par rapport à l'axe optique ZZ'.

Dans la forme de réalisation illustrée sur les figures 2 et 3, l'organe déformable 21 comprend deux lamelles flexibles 28 qui se croisent selon l'axe XX', pour former un X en vue de dessus. Les extrémités de chacune des lamelles flexibles 28 sont fixées respectivement à la partie d'extrémité 26 de la lame souple 16 et à la pièce 20. Cette fixation peut notamment être assurée par un encastrement (emmanchement brasure, etc.).

Comme l'illustre la figure 3, l'une des lamelles flexibles 28 présente une forme rectangulaire et comporte une fenêtre centrale par laquelle passe une partie centrale, de largeur réduite, de l'autre lamelle flexible. Afin que les comportements en flexion des deux lamelles flexibles 28 soient identiques, les sections de ces lamelles, à l'emplacement où elles se coupent selon l'axe XX', sont égales.

La pièce 20 présente sensiblement la même épaisseur que les parties d'extrémité 24 et 26 de la lame souple 16.

Comme on l'a représenté schématiquement sur la figure 2, la lame souple 16 est reliée par sa partie d'extrémité 24 au bloc 18 solidaire du support 12 par une première paire de tiges de fixation 30. De façon comparable, la pièce 20 est fixée sur un bloc 32 solidaire du miroir 10 par une deuxième paire de tiges de fixation 34. Les fixations assurées par ces tiges 30 et 34 sont telles qu'il n'existe aucun contact direct entre la lame souple 16 et le bloc 18 ni entre la pièce 20 et le bloc 32. Tous les efforts supportés par le mécanisme sont donc transmis au travers des tiges 30 et 34.

Comme on l'a illustré par des traits mixtes sur la figure 2, les tiges de fixation 30 et 34 coupent à angle droit l'axe XX', orienté radialement par rapport à l'axe optique ZZ'. De plus, les tiges 30 et 34 de chacune des paires sont disposées symétriquement par rapport à l'axe longitudinal YY' de la lame souple 16.

Du fait que tous les efforts supportés par le mécanisme transitent par l'axe radial XX' matérialisé par l'organe déformable 21, ces efforts font travailler les tiges de fixation 30 et 34 uniquement à la traction et à la compression. Quelle que soit l'intensité des efforts appliqués au mécanisme, la stabilité du positionnement du miroir 10 par rapport au support 12 est ainsi garantie, le contact étant de type butée positive, interdisant les micro-déplacements pouvant apparaître dans le cas de liaisons par frottement.

Dans la pratique, les tiges de fixation 30 et 34 peuvent être constituées par des boulons ou des tirants traversant des entretoises tubulaires qui maintiennent l'écartement entre les pièces.

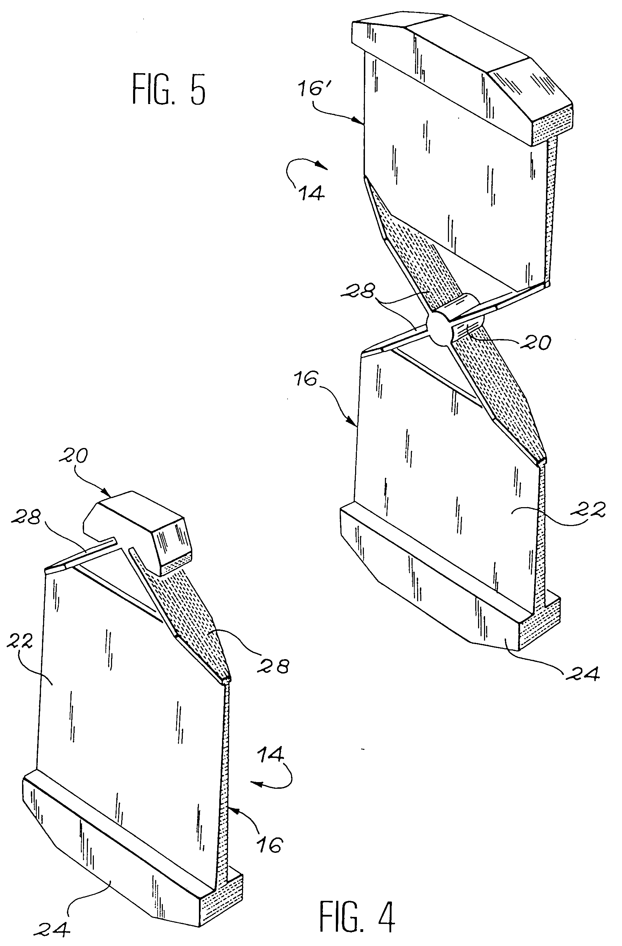

Dans la forme de réalisation qui vient d'être décrite en se référant aux figures 2 et 3, la lame souple 16, la pièce 20 et les lamelles flexibles 28 de l'organe déformable 21 constituent des pièces qui sont usinées séparément, puis assemblées. Au contraire, dans les formes de réalisation qui vont à présent être décrites en se référant aux figures 4 et 5, ces différentes pièces sont réalisées simultanément dans un même bloc usiné.

Ainsi, dans la forme de réalisation de la figure 4, les deux lames souples 28 constituant l'organe déformable 21 sont obtenues par usinage dans un bloc unique dans lequel sont également formées la lame souple 16 et la pièce 20.

Dans cette forme de réalisation de la figure 4, la diminution progressive de section de la lame souple 16 depuis la partie d'extrémité 24 prévue pour être fixée sur le support 12 (figure 1) jusqu'à l'extrémité opposée reliée à la pièce 20 par les lamelles flexibles 28 n'est plus assurée par une diminution de largeur mais par une diminution progressive de l'épaisseur de la partie principale 22 de cette lame.

Une autre différence entre cette forme de réalisation de la figure 4 et la forme de réalisation précédemment décrite en se référant aux figures 2 et 3 concerne la suppression de la partie d'extrémité 26 de la lame souple 16, servant sur les figures 2 et 3 à l'encastrement des extrémités correspondantes des lamelles flexibles 28. Les extrémités des lamelles flexibles 28 sont donc solidarisées directement de la partie principale 22 de la lame souple 16.

Par ailleurs, au lieu d'être formée de deux lamelles 28 croisées pour former un X en vue de dessus, comme dans la forme de réalisation des figures 2 et 3, l'organe déformable 21 est formé de deux lamelles 28 croisées pour former un V en vue de dessus. Le sommet de ce V, qui définit l'axe de rotation XX' par flexion des lamelles 28, est alors directement solidaire de la pièce 20.

Les fixations de la partie d'extrémité 24 sur le support 12 et de la pièce 20 sur le miroir 10 s'effectuent par ailleurs de la manière décrite précédemment en se référant à la figure 2.

Dans cette deuxième forme de réalisation de l'invention qui vient d'être décrite en se référant à la figure 4, les dispositifs de liaison 14 présentent un caractère plus compact que dans la première forme de réalisation décrite. De ce fait, ces dispositifs de liaison 14 peuvent être utilisés pour supporter un miroir 10 de plus petites dimensions. Au lieu d'être orienté selon un axe YY' tangentiel à une surface cylindrique centrée sur l'axe optique ZZ', l'axe longitudinal de la lame souple 16 peut alors être orienté parallèlement à l'axe optique ZZ', selon un agencement plus classique.

Dans ces conditions, le bloc usiné dans lequel sont formées la lame souple 16, les lamelles flexibles 28 et la pièce 20 est avantageusement réalisé en un matériau présentant un très faible coefficient de dilatation thermique, tel que de l'Invar (marque déposée).

La forme de réalisation de la figure 5 présente de nombreuses similitudes avec celle qui vient d'être décrite en se référant à la figure 4. Ainsi, le dispositif de liaison 14 est composé de deux sous-ensembles tels qu'illustré sur la figure 4, disposés symétriquement, ce dispositif 14 étant réalisé par usinage dans un bloc unique. Par ailleurs, la lame souple 16 présente les mêmes caractéristiques que celle qui a été décrite en se référant à la figure 4.

Dans cette forme de réalisation de la figure 5, le deuxième sous-ensemble comporte une deuxième lame souple 16' dont la forme et les dimensions sont les mêmes que celles de la lame souple 16. De plus, les lamelles flexibles 28 constituant l'organe déformable 21 se croisent pour former un X dont les extrémités sont fixées respectivement sur la lame souple 16 et sur la lame souple 16'.

Dans ce cas, étant donné que les lamelles flexibles 28 sont réalisées d'un seul bloc avec les lames souples 16 et 16', elles sont liées l'une à l'autre, selon l'axe radial XX', matérialisé par un bloc ou renflement cylindrique 20.

Dans cette forme de réalisation de la figure 5, la lame souple 16 et la lame 16' sont totalement symétriques par rapport à l'axe radial XX' matérialisé par le renflement cylindrique 20.

Etant donné que l'encombrement du dispositif de liaison 14 de la figure 5 est plus important que dans le cas de la figure 4, l'axe longitudinal de ce dispositif est avantageusement placé selon la direction tangentielle YY', comme dans le cas du dispositif décrit en se référant aux figures 2 et 3.

Dans ce cas, les fixations de l'élément 14 sur le support 12 sont réalisées par l'intermédiaire des pièces 24 et 24'. Le bloc 32, solidaire du miroir, est fixé sur la pièce 20. Ces fixations sont effectuées de la même manière que décrit précédemment en se référant à la figure 2.

Il est à noter que les différentes formes de réalisation décrites précédemment peuvent être modifiées et combinées entre elles de différentes manières sans sortir du cadre de l'invention. Ainsi, des nervures comparables à la nervure 28 peuvent être prévues sur les autres lames souples équipant les dispositifs de liaison 14 décrits en se référant aux figures 4 et 5. Par ailleurs, l'évolution progressive de la section de la lame peut être obtenue en combinant un changement de largeur et un changement d'épaisseur de la lame. Enfin, au lieu d'être pleines et dépourvues de toute perforation comme dans les formes de réalisation décrites, les lames souples peuvent comporter des évidements, sans sortir du cadre de l'invention.

## Revendications

1. Mécanisme de montage isostatique d'un élément fragile (10) tel qu'un miroir, sur un support (12), comprenant trois dispositifs de liaison (14) répartis circonférentiellement autour d'un axe longitudinal de l'élément fragile, chacun de ces dispositifs de liaison comprenant une première lame souple (16) disposée sensiblement dans un plan tangent à une surface cylindrique centrée sur ledit axe longitudinal, une première extrémité (24) de la lame souple étant fixée sur le support et une deuxième extrémité (26) de la lame souple étant reliée à l'élément fragile par un organe déformable (21), autorisant une rotation relative entre l'élément fragile et son support, autour d'un axe orienté radialement par rapport audit axe longitudinal, caractérisé par le fait que la lame souple (16) a une section qui diminue progressivement depuis sa première extrémité (24) vers sa deuxième extrémité (26), l'organe déformable (21) étant apte à se déformer en flexion pour permettre ladite rotation relative autour dudit axe orienté radialement.

2. Mécanisme selon la revendication 1, caractérisé par le fait que l'organe déformable (21) comprend au moins deux lamelles (28) croisées selon ledit axe orienté radialement et dont les extrémités sont fixées respectivement sur la deuxième extrémité de la lame souple (16) et sur une pièce (20) liée à l'élément fragile (10).

3. Mécanisme selon la revendicatin 2, caractérisé par le fait que les lamelles (28) forment un X.

4. Mécanisme selon la revendication 2, caractérisé par le fait que les lamelles (28) forment un V.

5. Mécanisme selon l'une quelconque des revendications 2 à 4, caractérisé par le fait que les lamelles (28), la lame souple (16) et ladite pièce (20,16') sont réalisées d'un seul tenant.

6. Mécanisme selon l'une quelconque des revendications 2 à 5, caractérisé par le fait que ladite pièce (16') est une deuxième lame souple, identique et coplanaire à la première lame souple (16) et dont la section diminue progressivement depuis une première extrémité fixée sur le support (12) jusqu'à une deuxième extrémité fixée sur les lamelles (28).

7. Mécanisme selon l'une quelconque des revendications 2 à 6, caractérisé par le fait que ladite pièce (16',20) est fixée à l'élément fragile (10) et la lame souple (16) au support (12) par deux paires de tiges de fixation (30, 34) qui coupent à angle droit ledit axe orienté radialement.

8. Mécanisme selon la revendication 7, caractérisé par le fait que les tiges de fixation (30, 34) sont disposées symétriquement par rapport à un axe longitudinal de la lame souple (16).

9. Mécanisme selon l'une quelconque des revendications 7 et 8, caractérisé par le fait que les tiges de fixation (30,34) assurent une liaison de type butée positive interdisant tout micro-glissement.

10. Mécanisme selon l'une quelconque des revendications précédentes, caractérisé par le fait que chacune des lames souples (16) présente au moins une nervure (36) qui s'étend parallèlement à un axe longitudinal de cette lame.

11. Mécanisme selon l'une quelconque des revendications précédentes, caractérisé par le fait que chacune des lames souples (16) comporte un axe longitudinal orienté selon une direction (YY') tangentielle à un cercle centré sur l'axe de l'élément fragile.

12. Mécanisme selon l'une quelconque des revendications 1 à 10, caractérisé par le fait que chacune des lames souples (16) comporte un axe longitudinal orienté selon la direction axiale et est réalisée en un matériau à très faible coefficient de dilatation thermique.
